# EUROPEAN PATENT APPLICATION

(11) **EP 4 550 924 A1**
(43) Date of publication of application: **07.05.2025**
(21) Application number: 22948325.0
(22) Date of filing: 28.06.2022
(51) Int. Cl.: H04W 76/00

(54) **TRANSMISSION CONTROL METHOD AND APPARATUS**

(71) Applicant: Beijing Xiaomi Mobile Software Co., Ltd., Beijing 100085 (CN)
(72) Inventor: WU, Yumin, Beijing 100085 (CN); XIONG, Yi, Beijing 100085 (CN)
(74) Representative: Stöckeler, Ferdinand
(86) International application number: PCT/CN2022/102075
(87) International publication number: WO 2024/000205

(57) **Abstract**

Disclosed in the embodiments of the present application are a transmission control method and apparatus, which can be applied in the fields of mobile communication systems, etc. The method comprises: receiving a first indication message, which is sent by means of a second access network device, wherein the first indication message is used for stopping transmission between a first access network device and a terminal device (301). By means of an access network device corresponding to a cell or cell group, which has been deactivated by means of a terminal device, transmission between the access network device and the terminal device can be stopped, or by means of an access network device corresponding to a cell or cell group, which is to be deactivated by means of the terminal device, transmission between the access network device and the terminal device can be stopped, thereby preventing a waste of resources caused by unnecessary occupation of transmission resources.

## Description

### FIELD

The present invention relates to the field of communication technology, and more particularly to a method and apparatus for transmission control.

### BACKGROUND

In a 5th generation (5G) mobile communication system, a network side device can provide a terminal with at least two cells or at least two cell groups preconfigured for subsequent selective activation of a target cell or target cell group or selective deactivation of a source cell or source cell group accordingly.

How to reduce the waste of transmission resource when the network side device instructs the terminal to activate or deactivate a cell (or cell group) is a technical problem that needs to be solved.

### SUMMARY

Examples of the present invention provide a method and apparatus for transmission control, which may be applied to mobile communication systems and other fields. An access network device corresponding to a cell or cell group which is deactivated by a terminal can stop transmission with the terminal, or an access network device corresponding to a cell or cell group to be deactivated by a terminal can stop transmission with the terminal, so as to avoid occupying unnecessary transmission resources and avoid waste of resources.

In a first aspect, examples of the present invention provide a method for transmission control, which is performed by a first access network device, and includes: receiving a first indication message sent by a second access network device; and the first indication message is configured to stop transmission between the first access network device and a terminal.

In an embodiment, the first access network device is at least one of:
an access network device corresponding to a cell that is deactivated;
an access network device corresponding to a cell group that is deactivated;
an access network device corresponding to a cell to be deactivated; or
an access network device corresponding to a cell group to be deactivated.

In an embodiment, the first indication message includes at least one of:
an identifier of a cell corresponding to the first access network device;
an identifier of a cell group corresponding to the first access network device;
an identifier of the terminal; or
a bearer identifier of the terminal.

In an embodiment, the method further includes: discarding downlink data that is not transmitted between the first access network device and the terminal.

In an embodiment, the first indication message carries indication information of a third access network device; and the method further includes: forwarding downlink data that is not transmitted between the first access network device and the terminal to the third access network device.

In an embodiment, the indication information of the third access network device includes at least one of:
an identifier of a cell corresponding to the third access network device;
an identifier of a cell group corresponding to the third access network device; or
an interface identifier of the third access network device.

In an embodiment, the third access network device is at least one of:
an access network device corresponding to a cell that is activated;
an access network device corresponding to a cell group that is activated;
an access network device corresponding to a cell to be activated; or
an access network device corresponding to a cell group to be activated.

In an embodiment, the method further includes: sending first uplink data received from the terminal before receiving the first indication message to a core network device; and/or discarding second uplink data received from the terminal after receiving the first indication message.

In an embodiment, the second access network device is configured to send a second indication message to the terminal; the second indication message is configured to instruct the terminal to deactivate a cell or cell group corresponding to the first access network device, and/or the second indication message is configured to instruct the terminal to activate a cell or cell group corresponding to a third access network device.

In an embodiment, the second access network device is triggered to send the first indication message by at least one of:
the second access network device sending the second indication message;
the second access network device receiving a first acknowledgement feedback message; where the first acknowledgement feedback message indicates that the terminal has received the second indication message; or
the second access network device receiving a second acknowledgement feedback message; where the second acknowledgement feedback message indicates that the terminal accesses the third access network device.

In an embodiment, the second access network device is triggered to send the second indication message by: the second access network device sending the first indication message.

In an embodiment, the method further includes: releasing a transmission resource of the terminal; and/or retaining a configuration of the transmission resource of the terminal.

In an embodiment, the second access network device is at least one of:
an access network device used for communication between the terminal and a core network device;
an access network device used for communication between the terminal and the first access network device;
an access network device corresponding to a serving cell group that is activated by the terminal; or
an access network device corresponding to a serving cell that is activated by the terminal.

In a second aspect, examples of the present invention provide another method for transmission control, which is performed by a second access network device, and includes: sending a first indication message to the first access network device; and the first indication message is configured to stop transmission between the first access network device and a terminal.

In an embodiment, the first access network device is at least one of:
an access network device corresponding to a cell that is deactivated;
an access network device corresponding to a cell group that is deactivated;
an access network device corresponding to a cell to be deactivated; or
an access network device corresponding to a cell group to be deactivated.

In an embodiment, the first indication message includes at least one of:
an identifier of a cell corresponding to the first access network device;
an identifier of a cell group corresponding to the first access network device;
an identifier of the terminal; or
a bearer identifier of the terminal.

In an embodiment, the first indication message carries indication information of a third access network device; and the first indication message is configured to instruct the first access network device to forward downlink data of the terminal to the third access network device.

In an embodiment, the indication information of the third access network device includes at least one of:
an identifier of a cell corresponding to the third access network device;
an identifier of a cell group corresponding to the third access network device; or
an interface identifier of the third access network device.

In an embodiment, the third access network device is at least one of:
an access network device corresponding to a cell that is activated;
an access network device corresponding to a cell group that is activated;
an access network device corresponding to a cell to be activated; or
an access network device corresponding to a cell group to be activated.

In an embodiment, the method further includes: sending a second indication message to the terminal; the second indication message is configured to instruct the terminal to deactivate a cell or cell group corresponding to the first access network device, and/or the second indication message is configured to instruct the terminal to activate a cell or cell group corresponding to a third access network device.

In an embodiment, the second access network device is triggered to send the first indication message to the first access network device by at least one of:
the second access network device sending the second indication message;
the second access network device receiving a first acknowledgement feedback message; where the first acknowledgement feedback message indicates that the terminal has received the second indication message; or
the second access network device receiving a second acknowledgement feedback message; where the second acknowledgement feedback message indicates that the terminal accesses the third access network device.

In an embodiment, the second access network device is triggered to send the second indication message by: the second access network device sending the first indication message.

In an embodiment, the method further includes: receiving a notification message sent by a fourth access network device or the terminal, where the notification message is sent after the fourth access network device sends a second indication message to the terminal; or sending a third indication message to the fourth access network device, where the third indication message is configured to trigger the fourth access network device to send the second indication message to the terminal. The second indication message is configured to instruct the terminal to deactivate a cell or cell group corresponding to the first access network device, and/or the second indication message is configured to instruct the terminal to activate a cell or cell group corresponding to a third access network device.

In an embodiment, the notification message indicates at least one of:
the terminal accessing the third access network device;
the fourth access network device sending the second indication message;
the fourth access network device receiving a first acknowledgement feedback message, where the first acknowledgement feedback message indicates that the terminal has received the second indication message; or
the fourth access network device receiving a second acknowledgement feedback message, where the second acknowledgement feedback message indicates that the terminal accesses the third access network device.

In an embodiment, the second access network device is at least one of:
an access network device used for communication between the terminal and a core network device;
an access network device used for communication between the terminal and the first access network device;
an access network device corresponding to a serving cell group that is activated by the terminal; or
an access network device corresponding to a serving cell that is activated by the terminal.

In a third aspect, examples of the present invention provide another method for transmission control, which is performed by a first access network device, and includes: stopping transmission between the first access network device and a terminal based on at least one trigger condition of: the terminal having deactivated a cell or cell group corresponding to the first access network device; or the terminal being to deactivate a cell or cell group corresponding to the first access network device.

In an embodiment, the method further includes: sending a second indication message to the terminal; the second indication message is configured to instruct the terminal to deactivate the cell or cell group corresponding to the first access network device, and/or the second indication message is configured to instruct the terminal to activate a cell or cell group corresponding to a third access network device.

In an embodiment, the method further includes: forwarding downlink data that is not transmitted between the first access network device and the terminal to the third access network device.

In an embodiment, the method further includes: receiving a notification message sent by a fourth access network device or the terminal, and the notification message indicates at least one of:
the terminal accessing a third access network device;
the fourth access network device sending a second indication message;
the fourth access network device receiving a first acknowledgement feedback message, where the first acknowledgement feedback message indicates that the terminal has received the second indication message; or
the fourth access network device receiving a second acknowledgement feedback message, where the second acknowledgement feedback message indicates that the terminal accesses the third access network device;
where the second indication message is configured to instruct the terminal to deactivate the cell or cell group corresponding to the first access network device, and/or the second indication message is configured to instruct the terminal to activate a cell or cell group corresponding to the third access network device.

In an embodiment, the method further includes: triggering the fourth access network device to send the second indication message to the terminal.

In an embodiment, the method further includes: discarding downlink data that is not transmitted between the first access network device and the terminal.

In an embodiment, the method further includes: sending uplink data received from the terminal to a core network device; and/or discarding uplink data received from the terminal.

In an embodiment, the method further includes: releasing a transmission resource of the terminal; and/or retaining a configuration of the transmission resource of the terminal.

In a fourth aspect, examples of the present invention provide an apparatus for transmission control, which includes: a receiving module, configured to receive a first indication message sent by a second access network device; and the first indication message is configured to stop transmission between a first access network device and a terminal.

In a fifth aspect, examples of the present invention provide an apparatus for transmission control, which includes: a sending module, configured to send a first indication message to a first access network device; and the first indication message is configured to stop transmission between the first access network device and a terminal.

In a sixth aspect, examples of the present invention provide an apparatus for transmission control, which includes: a transceiver module, configured to stop transmission between a first access network device and a terminal based on at least one trigger condition of: the terminal having deactivated a cell or cell group corresponding to the first access network device; or the terminal being to deactivate a cell or cell group corresponding to the first access network device.

In a seventh aspect, examples of the present invention provide a communication device, which includes: a processor; and a memory having stored therein a computer program, and the processor is configured to execute the computer program stored in the memory to cause the communication device to perform the method as described in the first aspect.

In an eighth aspect, examples of the present invention provide a communication device, which includes: a processor; and a memory having stored therein a computer program, and the processor is configured to execute the computer program stored in the memory to cause the communication device to perform the method as described in the second aspect.

In a ninth aspect, examples of the present invention provide a communication device, which includes: a processor; and a memory having stored therein a computer program, and the processor is configured to execute the computer program stored in the memory to cause the communication device to perform the method as described in the third aspect.

In a tenth aspect, examples of the present invention provide a communication device, which includes: a processor and an interface circuit, the interface circuit is configured to receive code instructions and transmit the code instructions to the processor, and the processor is configured to run the code instructions to cause the communication device to perform the method as described in the first aspect.

In an eleventh aspect, examples of the present invention provide a communication device, which includes: a processor and an interface circuit, the interface circuit is configured to receive code instructions and transmit the code instructions to the processor, and the processor is configured to run the code instructions to cause the communication device to perform the method as described in the second aspect.

In a twelfth aspect, examples of the present invention provide a communication device, which includes: a processor and an interface circuit, the interface circuit is configured to receive code instructions and transmit the code instructions to the processor, and the processor is configured to run the code instructions to cause the communication device to perform the method as described in the third aspect.

In a thirteenth aspect, examples of the present invention provide a system for transmission control, which includes the apparatus for transmission control described in the fourth aspect, the apparatus for transmission control described in the fifth aspect, and the apparatus for transmission control described in the sixth aspect, or the system includes the communication device described in the seventh aspect, the communication device described in the eighth aspect, and the communication device described in the ninth aspect, or the system includes the communication device described in the tenth aspect, the communication device described in the eleventh aspect, and the communication device described in the twelfth aspect.

In a fourteenth aspect, examples of the present invention provide a computer-readable storage medium, having stored therein instructions used by the terminal described above, and the instructions, when executed, cause the terminal to perform the method as described in the first aspect.

In a fifteenth aspect, examples of the present invention provide a readable storage medium, having stored therein instructions used by the access network device described above, and the instructions, when executed, cause the access network device to perform the method as described in the second aspect.

In a sixteenth aspect, examples of the present invention provide a readable storage medium, having stored therein instructions used by the access network device described above, and the instructions, when executed, cause the access network device to perform the method as described in the third aspect.

In a seventeenth aspect, the present invention also provides a computer program product including a computer program that, when run on a computer, causes the computer to execute the method described in the first aspect.

In an eighteenth aspect, the present invention also provides a computer program product including a computer program that, when run on a computer, causes the computer to execute the method described in the second aspect.

In a nineteenth aspect, the present invention also provides a computer program product including a computer program that, when run on a computer, causes the computer to execute the method described in the third aspect.

In a twentieth aspect, the present invention provides a chip system, which includes at least one processor and an interface, for supporting the terminal to implement the functions described in the first aspect, for example, determining or processing at least one of data and information involved in the above method. In a possible design, the chip system further includes a memory, and the memory is used to store computer programs and data necessary for the terminal. The chip system may be composed of chips, or may include chips and other discrete devices.

In a twenty-first aspect, the present invention provides a chip system, which includes at least one processor and an interface, for supporting the access network device to implement the functions described in the second aspect, for example, determining or processing at least one of data and information involved in the above method. In a possible design, the chip system further includes a memory, and the memory is used to store computer programs and data necessary for the access network device. The chip system may be composed of chips, or may include chips and other discrete devices.

In a twenty-second aspect, the present invention provides a chip system, which includes at least one processor and an interface, for supporting the access network device to implement the functions described in the third aspect, for example, determining or processing at least one of data and information involved in the above method. In a possible design, the chip system further includes a memory, and the memory is used to store computer programs and data necessary for the access network device. The chip system may be composed of chips, or may include chips and other discrete devices.

In a twenty-third aspect, the present invention provides a computer program that, when run on a computer, causes the computer to execute the method described in the first aspect.

In a twenty-fourth aspect, the present invention provides a computer program that, when run on a computer, causes the computer to execute the method described in the second aspect.

In a twenty-fifth aspect, the present invention provides a computer program that, when run on a computer, causes the computer to execute the method described in the third aspect.

With the method and apparatus for transmission control disclosed in examples of the present invention, the first indication message sent by the second access network device is received, the first indication message is configured to stop the transmission between the first access network device and the terminal, so that the access network device corresponding to the cell or cell group that is deactivated by the terminal can stop transmission with the terminal, or the access network device corresponding to the cell or cell group to be deactivated by the terminal can stop the transmission with the terminal, so as to avoid occupying unnecessary transmission resources and avoid waste of resources.

### BRIEF DESCRIPTION OF THE DRAWINGS

In order to clearly illustrate the technical solutions in examples of the present invention or in the related art, drawings to be used for the description of examples of the present invention or the related art are described below.
FIG. 1 is a schematic diagram of a dual-connection architecture according to examples of the present invention;
FIG. 2 is a schematic architecture diagram of a communication system according to examples of the present invention;
FIG. 3 is a schematic flowchart of a method for transmission control according to an example of the present invention;
FIG. 4 is a schematic flowchart of another method for transmission control according to an example of the present invention;
FIG. 5 is a schematic flowchart of another method for transmission control according to an example of the present invention;
FIG. 6 is a schematic flowchart of another method for transmission control according to an example of the present invention;
FIG. 7 is a schematic flowchart of another method for transmission control according to an example of the present invention;
FIG. 8 is a schematic flowchart of another method for transmission control according to an example of the present invention;
FIG. 9 is a schematic flowchart of another method for transmission control according to an example of the present invention;
FIG. 10 is a schematic flowchart of another method for transmission control according to an example of the present invention;
FIG. 11 is a schematic flowchart of another method for transmission control according to an example of the present invention;
FIG. 12 is a schematic flowchart of another method for transmission control according to an example of the present invention;
FIG. 13 is a schematic block diagram of an apparatus for transmission control according to an example of the present invention;
FIG. 14 is a schematic block diagram of another apparatus for transmission control according to an example of the present invention;
FIG. 15 is a schematic block diagram of another apparatus for transmission control according to an example of the present invention.
FIG. 16 is a schematic block diagram of another apparatus for transmission control according to an example of the present invention; and
FIG. 17 is a schematic block diagram of a chip according to an example of the present invention.

### DETAILED DESCRIPTION

To facilitate understanding, relevant terms mentioned in examples of the present invention are first introduced.

### 1. MR-DC (Multi-Radio Dual Connectivity, multi-radio access technology dual connection)

MR-DC is a generalized Intra-E-UTRA (Intra-Evolved-UMTS (Universal Mobile Telecommunications System) Terrestrial Radio Access) dual connection. A terminal can use radio resources provided by two different schedules, which are located at two different NG-RAN (5G Radio Access Network) nodes and connected through non-ideal backhaul. One of the two nodes provides NR access, the other node provides E-UTRA or NR access, and one of the two nodes serves as an MN (Master Node), and the other node serves as an SN (Secondary Node). MN and SN are connected through a network interface, and at least the MN is connected to a core network.

### 2. MR-DC adopting EPC (Evolved Packet Core)

E-UTRAN (Evolved-UMTS Terrestrial Radio Access Network) supports MR-DC through E-UTRA-NR DC (Evolved-UMTS Terrestrial Radio Access-New Radio Dual Connectivity, referred to as EN-DC for short). A terminal is connected to an eNB (evolved NodeB, a 4G base station) acting as MN and an en-gNB (en-next generation NodeB, a transformed 5G base station) acting as SN.

### 3. MR-DC adopting 5GC (5G core, 5G core network)

### (1) E-UTRA-NR Dual Connectivity NGEN-DC (NG-RAN E-UTRA-NR Dual Connectivity, 5G Radio Access Network Evolved-UMTS Terrestrial Radio Access- New Radio Dual Connectivity)

NG-RAN supports NGEN-DC, in which a terminal is connected to an ng-eNB (next generation evolved NodeB) acting as MN and a gNB (next generation NodeB) acting as SN. The ng-eNB is connected to 5GC, and the gNB is connected to the ng-eNB through an Xn interface.

### (2) NR-E-UTRA Dual Connectivity (NE-DC for short)

NG-RAN supports NE-DC, in which a terminal is connected to a gNB acting as MN and an ng-eNB acting as SN. The gNB is connected to 5GC, and the ng-eNB is connected to the gNB through an Xn interface.

### (3) NR-NR Dual Connectivity (NR-DC for short)

NG-RAN supports NR-DC, in which a terminal is connected to a gNB acting as MN and a gNB acting as SN. The master gNB is connected to 5GC through an NG interface, the secondary gNB is connected to the 5GC through an NG-U interface, and the gNBs are connected through an Xn interface. In addition, NR-DC may also be used by the terminal to access a single gNB. At this time, the gNB accessed by the terminal can serve as both the MN and the SN, and MCG and SCG are configured at the same time.

For better understanding of a method for transmission control disclosed in examples of the present invention, the communication system to which examples of the present invention is applicable is first described below.

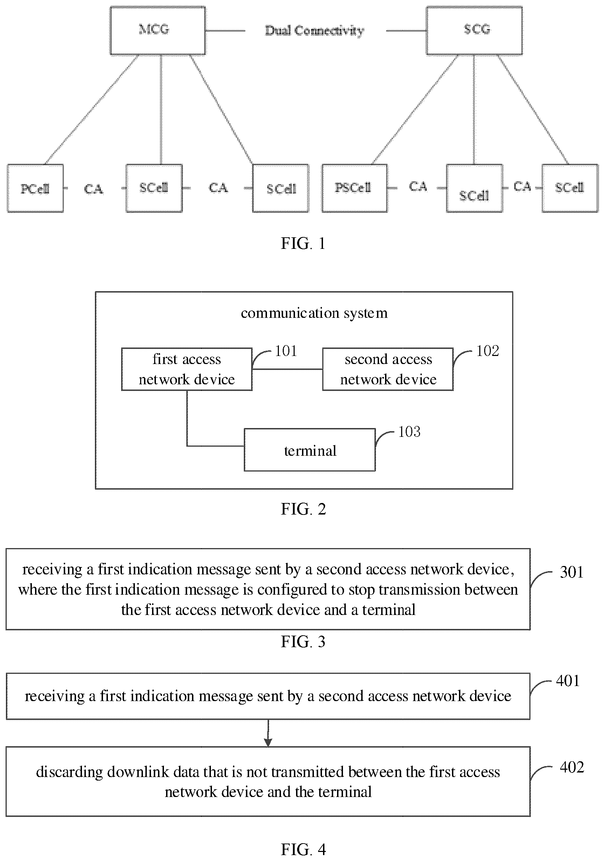

In the 5G communication system, a dual connectivity (DC) architecture can be adopted. Under this architecture, a terminal can access two cell groups, as shown in FIG. 1, namely a master cell group (MCG) and a secondary cell group (SCG). MCG and SCG correspond to MN and SN at the network device side, respectively. MCG may include a plurality of cells, in which a cell for initiating initial access is called PCell. As the name implies, PCell is the most "primary" cell in MCG. As shown in FIG. 1, in addition to PCell, MCG may also include SCell(s), where PCell and SCell(s) are united through carrier aggregation (CA). SCG may include a primary secondary cell (PSCell) and SCell(s). Since a lot of signalings are only sent on PCell and PSCell, for the convenience of description, a concept is defined in protocols: special cell (SpCell), as shown in FIG. 1, PCell and PSCell may be collectively referred to as SpCells.

That is, MCG includes SpCell (PCell) and one or more SCells. MCG refers to a group of serving cells associated with MN in MR-DC. MN refers to a wireless access node that provides control plane connection to a core network in MR-DC. MN may be a master eNB (in EN-DC), a master ng-eNB (in NGEN-DC) or a master gNB (in NR-DC and NE-DC). SCG includes SpCell (PSCell) and one or more SCells. SCG refers to a group of serving cells associated with SN in MR-DC. SN refers to a wireless access node in MR-DC, which can have no control plane connection to the core network, and provides an additional resource for a terminal. The SN may be an en-gNB (in EN-DC), a secondary ng-eNB (in NE-DC) or a secondary gNB (in NR-DC and NGEN-DC).

The network side device can provide preconfigured cell(s) or cell group(s) for a terminal. For example, the network side device can provide for the terminal at least two primary cells or at least two master cell groups preconfigured. Similarly, the network side device can also provide for the terminal at least two secondary cells or at least two secondary cell groups preconfigured. The terminal can, based on an indication from the network side device, activate a preconfigured cell or cell group, or deactivate a preconfigured cell or cell group, and then access an access network device corresponding to the activated cell or cell group, so as to realize the switch from an access network device corresponding to the deactivated source cell or source cell group to the access network device corresponding to the activated target cell or target cell group.

When the terminal deactivates the preconfigured cell or cell group based on the indication from the network side device, since the access network device corresponding to the deactivated cell or cell group does not know that it is deactivated by the terminal, or the access network device does not know that it is to be deactivated by the terminal, it will continue the transmission with the terminal, which may lead to failed transmission, occupying unnecessary transmission resources and wasting resources.

In order to solve the above problems, the access network device corresponding to the cell or cell group that is deactivated by the terminal can stop transmission with the terminal, or the access network device corresponding to the cell or cell group that is to be deactivated by the terminal can stop transmission with the terminal, to avoid occupying unnecessary transmission resources and avoid waste of resources.

For better understanding of a method for transmission control disclosed in examples of the present invention, the communication system to which examples of the present invention is applicable is first described below.

Referring to FIG. 2, FIG. 2 is a schematic architecture diagram of a communication system according to examples of the present invention. The communication system may include, but not limited to, an access network device and terminal 12. The number and forms of the devices shown in FIG. 2 are used as an example and do not constitute a limitation on examples of the present invention. The communication system may include two or more access network device and two or more terminals in practical applications. As an example for illustration, the communication system shown in FIG. 2 includes one first access network device 101, one second access network device 102, and one terminal 103.

It should be noted that the technical solutions of examples of the present invention may be applied to various communication systems, for example, a long term evolution (LTE) system, a 5th generation (5G) mobile communication system, a 5G new radio (NR) system, or other new mobile communication systems in the future. It should also be noted that a side link in examples of the present invention may also be called a sidelink or a direct communication link.

The first access network device 101 and the second access network device 102 in examples of the present invention are entities at a network side for sending or receiving signals. For example, the access network device 11 may be an evolved NodeB (eNB), a transmission reception point (TRP), a next generation NodeB (gNB) in an NR system, a base station in other future mobile communication systems, or an access node in a wireless fidelity (WiFi) system. Examples of the present invention do not limit the specific technique and specific device form adopted by the access network device. The access network device according to examples of the present invention may be composed of a central unit (CU) and distributed units (DUs). The CU may also be called a control unit. The CU-DU structure allows to split protocol layers of the access network device, such as a base station, functions of some protocol layers are centrally controlled in the CU, functions of some or all of the remaining protocol layers are distributed in the DUs, and the CU centrally controls the DUs.

The terminal 103 in examples of the present invention is an entity at a user side for receiving or sending signals, such as a mobile phone. The terminal may also be called a terminal device, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiver function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in a transportation safety, a wireless terminal in a smart city, a wireless terminal in a smart home, etc. Examples of the present invention do not limit the specific technique and the specific device form adopted by the terminal.

It can be understood that the communication system described in examples of the present invention is intended to illustrate the technical solutions of examples of the present invention more clearly, and does not constitute a limitation on the technical solutions according to examples of the present invention. Those of ordinary skill in the art will know that with the evolution of the system architecture and the emergence of new service scenarios, the technical solutions according to examples of the present invention are also applicable to similar technical problems.

The method and apparatus for transmission control according to the present invention will be introduced in detail below with reference to the accompanying drawings.

Referring to FIG. 3, FIG. 3 is a schematic flowchart of a method for transmission control according to an example of the present invention. The method in this example may be performed by a first access network device, as shown in FIG. 3, the method may include, but not limited to, the following steps.

In step 301, a first indication message sent by a second access network device is received, and the first indication message is configured to stop transmission between the first access network device and a terminal.

The first access network device may be at least one of:
an access network device corresponding to a cell that is deactivated;
an access network device corresponding to a cell group that is deactivated;
an access network device corresponding to a cell to be deactivated; or
an access network device corresponding to a cell group to be deactivated.

The second access network device is an access network device that learns that the cell or cell group corresponding to the first access network device is deactivated, or an access network device that learns that the cell or cell group corresponding to the first access network device is to be deactivated.

The second access network device may be at least one of the following devices, so that the second access network device can learn that the cell or cell group corresponding to the first access network device is deactivated, or learn that the cell or cell group corresponding to the first access network device is to be deactivated:
an access network device for sending a second indication message to the terminal, and the second indication message being configured to instruct the terminal to deactivate the cell or cell group corresponding to the first access network device, and/or the second indication message being configured to instruct the terminal to activate a cell or cell group corresponding to a third access network device;
an access network device used for communication between terminal and a core network device;
an access network device used for communication between the terminal and the first access network device;
an access network device corresponding to a serving cell group that is activated by the terminal; or
an access network device corresponding to a serving cell that is activated by the terminal.

It should be noted that the second access network device is an access network device for communication between the terminal and the core network device, and at the same time, it may also be an access network device for communication between the terminal and the first access network device. In this case, the second access network device is also called a master base station, i.e., a central control node that can be used to control communications between the terminal and multiple communication nodes (including the core network device and various access network devices), for example, the second access network device may be an anchor point of data transmission connection between the terminal and the core network device.

In the architecture of dual connectivity, the access network device corresponding to the serving cell group or serving cell that is activated by the terminal may be a serving MN, i.e., an access network device corresponding to an MCG activated by the terminal. Alternatively, the access network device corresponding to the serving cell group or serving cell that is activated by the terminal may be a serving SN, i.e., an access network device corresponding to an SCG activated by the terminal.

For example, the first access network device may send the first indication message and the second indication message:
Optionally, the serving MN sends the second indication message for deactivating an SCG-1 cell (or cell group) to the terminal, and the serving MN also sends the first indication message to an SN corresponding to the SCG-1 cell (or cell group).

Optionally, the serving MN sends the second indication message for deactivating an MCG-1 cell (or cell group) to the terminal, and the serving MN also sends the first indication message to an MN corresponding to the MCG-1 cell (or cell group).

Optionally, the serving SN sends the second indication message for deactivating an SCG-1 cell (or cell group) to the terminal, and the serving SN also sends the first indication message to an SN corresponding to the SCG-1 cell (or cell group).

Optionally, the serving SN sends the second indication message for deactivating an MCG-1 cell (or cell group) to the terminal, and the serving SN also sends the first indication message to an MN corresponding to the MCG-1 cell (or cell group).

For another example, the first indication message is sent by the serving MN:
Optionally, the serving MN sends the second indication message for deactivating an SCG-1 cell (or cell group) to the terminal, and the serving MN also sends the first indication message to an SN corresponding to the SCG-1 cell (or cell group).

Optionally, the serving MN sends the second indication message for deactivating an MCG-1 cell (or cell group) to the terminal, and the serving MN also sends the first indication message to an MN corresponding to the MCG-1 cell (or cell group).

Optionally, the serving SN sends the second indication message for deactivating an SCG-1 cell (or cell group) to the terminal, and the serving MN sends the first indication message to an SN corresponding to the SCG-1 cell (or cell group). The serving MN may be triggered by the serving SN to send the first indication message, or the serving MN may trigger the serving SN to send the second indication message.

Optionally, the serving SN sends the second indication message for deactivating an MCG-1 cell (or cell group) to the terminal, and the serving MN sends the first indication message to an MN corresponding to the MCG-1 cell (or cell group). The serving MN may be triggered by the serving SN to send the first indication message, or the serving MN may trigger the serving SN to send the second indication message.

For another example, the first indication message is sent by the serving SN:
Optionally, the serving SN sends the second indication message for deactivating an SCG-1 cell (or cell group) to the terminal, and the serving SN also sends the first indication message to an SN corresponding to the SCG-1 cell (or cell group).

The serving SN sends the second indication message for deactivating an MCG-1 cell (or cell group) to the terminal, and the serving SN also sends the first indication message to an MN corresponding to the MCG-1 cell (or cell group).

The serving MN sends the second indication message for deactivating an MCG-1 cell (or cell group) to the terminal, and the serving SN sends the first indication message to an SN corresponding to an SCG-1 cell (or cell group). The serving SN may be triggered by the serving MN to send the first indication message, or the serving SN may trigger the serving MN to send the second indication message.

The serving MN sends the second indication message for deactivating an MCG-1 cell (or cell group) to the terminal, and the serving SN sends the first indication message to an MN corresponding to the MCG-1 cell (or cell group). The serving SN may be triggered by the serving MN to send the first indication message, or the serving SN may trigger the serving MN to send the second indication message.

In order to illustrate the timing for sending the first indication message, examples of the present invention provide several possible embodiments. However, it is known to those skilled in the art that actual implementation solutions are not limited thereto.

As a first possible embodiment, before the second access network device sends the second indication message to the terminal to instruct the terminal to deactivate the cell or cell group corresponding to the first access network device, the second access network device may send the first indication message to the first access network device to stop the transmission between the first access network device and the terminal. That is, the second access network device is triggered by the first indication message to send the second indication message.

As a second possible embodiment, after the second access network device sends the second indication message to the terminal to instruct the terminal to deactivate the cell or cell group corresponding to the first access network device, the second access network device may send the first indication message to the first access network device to stop the transmission between the first access network device and the terminal. That is, the second access network device is triggered by the second indication message to send the first indication message. Optionally, the second access network device receives a first acknowledgement feedback message, and the first acknowledgement feedback message indicates that the terminal receives the second indication message; or optionally, the second access network device receives a second acknowledgement feedback message, and the second acknowledgement feedback message indicates that the terminal accesses a third access network device.

For example, in a possible scenario, the first or second possible embodiment mentioned above is performed. An SN corresponding to a current serving SCG of the terminal sends the second indication message to the terminal, to cause the terminal to change a current serving MCG of the terminal from MCG-1 to MCG-2, and the SN also sends the first indication message to an MN corresponding to the MCG-1. The SN may send the second indication message before sending the first indication message, or the SN may send the second indication message after sending the first indication message, or the SN may send the second indication message and the first indication message simultaneously, which is not limited in examples of the present invention.

As a third possible embodiment, the second access network device receives a notification message sent by a fourth access network device or the terminal, and the notification message is sent after the fourth access network device sends the second indication message to the terminal, and the second access network device is triggered by the notification message to send the first indication message to the first access network device to stop the transmission between the first access network device and the terminal. Optionally, the notification message indicates at least one of: the fourth access network device sending the second indication message; the fourth access network device receiving a first acknowledgement feedback message, and the first acknowledgement feedback message indicating that the terminal has received the second indication message; the fourth access network device receiving a second acknowledgement feedback message, and the second acknowledgement feedback message indicating that the terminal accesses the third access network device; or the terminal accessing the third access network device.

For example, in a possible scenario, the third possible embodiment mentioned above is performed. The terminal has two candidate SCG configurations (SCG-Config-1 and SCG-Config-2), an MN sends the second indication information to the terminal to change the currently activated SCG configuration of the terminal from the SCG-Config-1 to the SCG-Config-2. The terminal deactivates an SCG-1 corresponding to the SCG-Config-1 and activates an SCG-2 corresponding to the SCG-Config-2. When the terminal randomly accesses the SCG-2 successfully, the terminal or the access network device corresponding to the SCG-2 can send a notification message to the MN to notify the MN that the terminal has accessed the newly activated cell (or cell group). After receiving the notification message, the MN is triggered to send the first indication message.

As a fourth possible embodiment, the second access network device sends a third indication message to the fourth access network device, and the third indication message is configured to trigger the fourth access network device to send the second indication message to the terminal. Before sending the third indication message to the fourth access network device, the second access network device may send the first indication message to the first access network device to stop the transmission between the first access network device and the terminal. That is, the second access network device is triggered by the first indication message to send the third indication message.

As a fifth possible embodiment, the second access network device sends a third indication message to the fourth access network device, and the third indication message is configured to trigger the fourth access network device to send the second indication message to the terminal. After sending the third indication message to the fourth access network device, the second access network device may send the first indication message to the first access network device to stop the transmission between the first access network device and the terminal. That is, the second access network device is triggered by the third indication message to send the first indication message.

By implementing examples of the present invention, the access network device corresponding to the cell or cell group that is deactivated by the terminal can stop the transmission with the terminal, or the access network device corresponding to the cell or cell group that is to be deactivated by the terminal can stop the transmission with the terminal, so as to avoid occupying unnecessary transmission resources and avoid the waste of resources.

In order to illustrate that the first access network device stops transmission with the terminal, please refer to FIG. 4, FIG. 4 is a schematic flowchart of another method for transmission control according to an example of the present invention, which illustratively describes the processing of the first access network device on downlink data. The method in this example may be performed by a first access network device, as shown in FIG. 4, the method may include, but not limited to, the following steps.

In step 401, a first indication message sent by a second access network device is received.

The first indication message is configured to stop transmission between the first access network device and a terminal, and it may be a new message or may be a message with a newly added indication content in an original message, which is not limited in examples of the present invention.

The first indication message may include at least one of:
an identifier of a cell corresponding to the first access network device;
an identifier of a cell group corresponding to the first access network device;
an identifier of the terminal, such as a Cell Radio Network Temporary Identify (C-RNTI) identifier; or
a bearer identifier of the terminal, such as a Radio Bearer (RB) identifier.

Based on the identifier of the terminal or the bearer identifier of the terminal, the second access network device can determine the terminal which performs the deactivation, and based on this, the transmission with the terminal is stopped.

Based on the identifier of the cell corresponding to the first access network device or the identifier of the cell group corresponding to the first access network device, the second access network device may learn that the terminal deactivates the cell or cell group corresponding to the first access network device, and based on this, the transmission with the terminal is stopped.

In step 402, downlink data that is not transmitted between the first access network device and the terminal is discarded.

The first access network device receives the downlink data of the terminal from a core network or other access network devices before receiving the first indication message. When the first access network device receives the first indication message, there may still exist downlink data that is not transmitted to the terminal. For the downlink data that is not transmitted to the terminal, as a possible embodiment, the first access network device can discard the downlink data that is not transmitted between the first access network device and the terminal, thereby stopping the communication with the terminal, to prevent the first access network device from continuing to send downlink data to the terminal in a case where the terminal has deactivated the cell or cell group corresponding to the first access network device.

By implementing examples of the present invention, after receiving the first indication message sent by the second access network device, the first access network device discards the downlink data that is not transmitted between the first access network device and the terminal, thereby stopping the communication with the terminal, to prevent the first access network device from continuing to send downlink data to the terminal in the case where the terminal has deactivated the cell or cell group corresponding to the first access network device, avoid occupying unnecessary transmission resources, and avoid the waste of resources.

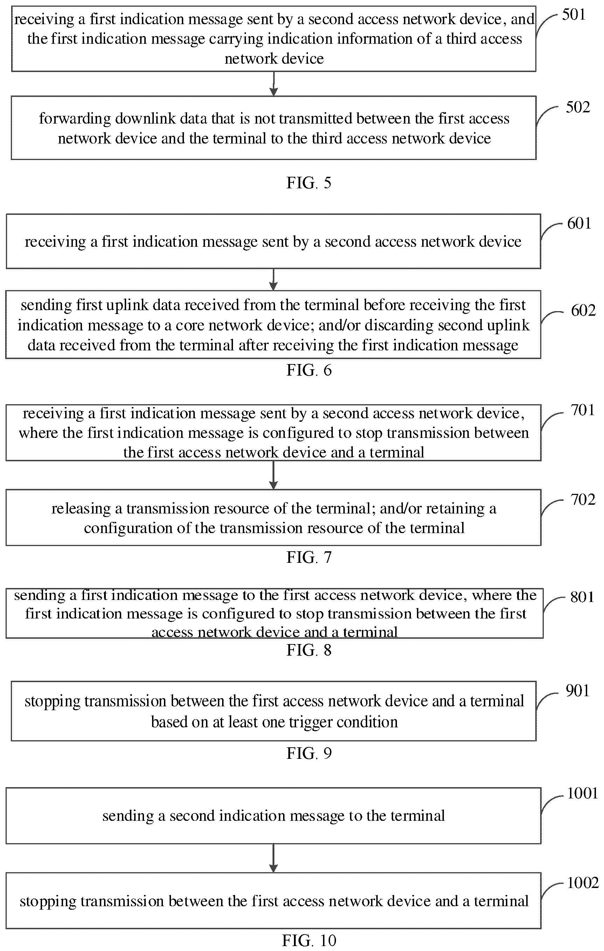

In order to illustrate that the first access network device stops transmission with the terminal, please refer to FIG. 5, FIG. 5 is a schematic flowchart of another method for transmission control according to an example of the present invention, which illustratively describes the processing of the first access network device on downlink data. The method in this example may be performed by a first access network device, as shown in FIG. 5, the method may include, but not limited to, the following steps.

In step 501, a first indication message sent by a second access network device is received, and the first indication message carries indication information of a third access network device.

The first indication message is configured to stop transmission between the first access network device and a terminal, and it may be a new message or may be a message with a newly added indication content in an original message, which is not limited in examples of the present invention.

The indication information of the third access network device includes at least one of:
an identifier of a cell corresponding to the third access network device;
an identifier of a cell group corresponding to the third access network device; or
an interface identifier of the third access network device.

The first access network device determines the third access network device according to the indication information of the third access network device, so that subsequent downlink data that is not transmitted between the first access network device and the terminal is forwarded to the third access network.

In step 502, downlink data that is not transmitted between the first access network device and the terminal is forwarded to the third access network device.

The first access network device receives downlink data of the terminal from a core network or other access network devices before receiving the first indication message. When the first access network device receives the first indication message, there may still exist downlink data that is not transmitted to the terminal. For the downlink data that is not transmitted to the terminal, as a possible embodiment, the first access network device can send the downlink data that is not transmitted between the first access network device and the terminal to the third access network device, and stop the communication with the terminal, and the third access network device sends the downlink data that is not transmitted between the first access network device and the terminal to the terminal, to avoid the situation where the first access network device continues to send downlink data to the terminal but the terminal cannot receive it when the terminal has deactivated the cell or cell group corresponding to the first access network device.

In order to enable the terminal to receive the downlink data that is not transmitted between the first access network device and the terminal from the third access network device, the third access network device may be at least one of:
an access network device corresponding to a cell that is activated;
an access network device corresponding to a cell group that is activated;
an access network device corresponding to a cell to be activated; or
an access network device corresponding to a cell group to be activated.

It should be noted that the third access network device is the access network device corresponding to the cell or cell group that is activated, which means that it may be an access network device corresponding to an originally activated cell or cell group whose activation state is not adjusted by the terminal, or it may be an access network device corresponding to a newly activated cell or cell group whose activation state is adjusted by the terminal.

In addition, it should be noted that the third access network device and the second access network device may be the same device or may be different devices, which is not limited in examples of the present invention.

By implementing examples of the present invention, after receiving the first indication message sent by the second access network device, the first access network device does not need to discard the downlink data that is not transmitted between the first access network device and the terminal, but sends the downlink data that is not transmitted between the first access network device and the terminal to the third access network device, and stops the transmission with the terminal, and the third access network device sends the downlink data that is not transmitted between the first access network device and the terminal to the terminal, to avoid the situation where the first access network device continues to send downlink data to the terminal but the terminal cannot receive it when the terminal has deactivated the cell or cell group corresponding to the first access network device. At the same time, it also prevents the first access network device from continuing to send downlink data to the terminal when the terminal has deactivated the cell or cell group corresponding to the first access network device, avoids occupying unnecessary transmission resources, and avoids the waste of resources.

In order to illustrate that the first access network device stops transmission with the terminal, please refer to FIG. 6, FIG. 6 is a schematic flowchart of another method for transmission control according to an example of the present invention, which illustratively describes the processing of the first access network device on downlink data. The method in this example may be performed by a first access network device, as shown in FIG. 6, the method may include, but not limited to, the following steps.

In step 601, a first indication message sent by a second access network device is received.

The first indication message is configured to stop transmission between the first access network device and a terminal, and it may be a new message or may be a message with a newly added indication content in an original message, which is not limited in examples of the present invention.

In step 602, first uplink data received from the terminal before receiving the first indication message is sent to a core network device; and/or second uplink data received from the terminal after receiving the first indication message is discarded.

As a first possible embodiment, before deactivating the cell or cell group corresponding to the first access network device, the terminal will continue to send uplink data to the first access network device, and the uplink data may be sent from the terminal to the first network device before the first network device receives the first indication message, which is called the first uplink data in examples of the present invention. Regarding the first uplink data received from the terminal before the first indication message is received, it is sent to the core network device, thereby completing the transmission of the first uplink data received.

As a second possible embodiment, before deactivating the cell or cell group corresponding to the first access network device, the terminal will continue to send uplink data to the first access network device, and the uplink data may be sent from the terminal to the first network device after the first network device receives the first indication message, which is called the second uplink data in examples of the present invention. Regarding the second uplink data received from the terminal after the first indication message is received, it is discarded by the first network device, so as not to transmit the second uplink data.

It should be noted that the first possible embodiment and the second possible embodiment described above may be performed individually or in combination, which are not limited in examples of the present invention.

By implementing the examples of the present invention, after the first access network device receives the first indication message sent by the second access network device, regarding the first uplink data received from the terminal before the first indication message is received, it is sent to the core network device, thereby completing the transmission of the first uplink data received, regarding the second uplink data received from the terminal after the first indication message is received, it is discarded by the first access network device, so as not to transmit the second uplink data, which prevents the first access network device from continuing to transmit the uplink data of the terminal in the case where the terminal has deactivated the cell or cell group corresponding to the first access network device, avoids occupying unnecessary transmission resources, and avoids the waste of resources.

In order to illustrate the processing manner of a first access network device on a transmission resource and/or a configuration of transmission resource of a terminal in a case where the first access network device stops transmission with the terminal, please refer to FIG. 7, FIG. 7 is a schematic flowchart of another method for transmission control according to an example of the present invention. The method in this example may be performed by a first access network device, as shown in FIG. 7, the method may include, but not limited to, the following steps.

In step 701, a first indication message sent by a second access network device is received, and the first indication message is configured to stop transmission between the first access network device and a terminal.

The first indication message is configured to stop the transmission between the first access network device and the terminal, and it may be a new message or may be a message with a newly added indication content in an original message, which is not limited in examples of the present invention.

For the information included in the first indication message and the manner for triggering the sending of the first indication message, please refer to the descriptions in other related examples, which will not be described again in this example.

In step 702, a transmission resource of the terminal is released, and/or a configuration of the transmission resource of the terminal is retained.

On the one hand, the first access network device stops the transmission between the first access network device and the terminal according to the first indication message; on the other hand, regarding the transmission resource between the first access network device and the terminal as well as the configuration of the transmission resource, the first access network device can retain the configuration of the transmission resource, so that when the terminal activates the cell or cell group corresponding to the first access network device again subsequently, the first access network device can allocate the transmission resource for the terminal according to the configuration of the transmission resource retained. In order to avoid waste of transmission resource, the transmission resource can be allocated to other terminals, that is, the first access network device can release the transmission resource of the terminal and allocate the transmission resource to other terminals for use.

By implementing examples of the present invention, the access network device corresponding to the cell or cell group that is deactivated by the terminal can stop the transmission with the terminal, or the access network device corresponding to the cell or cell group to be deactivated by the terminal can stop the transmission with the terminal, and at the same time, the transmission resource of the terminal is released, and/or the configuration of the transmission resource of the terminal is retained, so as to avoid occupying unnecessary transmission resource and avoid waste of resources.

Corresponding to the foregoing examples, in order to illustrate that the second access network device sends the first indication message, please refer to FIG. 8, FIG. 8 is a schematic flowchart of another method for transmission control according to an example of the present invention. The method in this example may be performed by the second access network device, as shown in FIG. 8, the method may include, but not limited to, the following steps.

In step 801, a first indication message is sent to a first access network device, and the first indication message is configured to stop transmission between the first access network device and a terminal.

In a possible embodiment, the first access network device may be at least one of:
an access network device corresponding to a cell that is deactivated;
an access network device corresponding to a cell group that is deactivated;
an access network device corresponding to a cell to be deactivated; or
an access network device corresponding to a cell group to be deactivated.

The second access network device is an access network device that learns that the cell or cell group corresponding to the first access network device is deactivated, or an access network device that learns that the cell or cell group corresponding to the first access network device is to be deactivated.

In a possible embodiment, the second access network device may be at least one of the following devices, so that the second access network device can learn that the cell or cell group corresponding to the first access network device is deactivated, or learn that the cell or cell group corresponding to the first access network device is to be deactivated:
an access network device for sending a second indication message to the terminal, and the second indication message being configured to instruct the terminal to deactivate the cell or cell group corresponding to the first access network device, and/or the second indication message being configured to instruct the terminal to activate a cell or cell group corresponding to a third access network device;
an access network device used for communication between terminal and a core network device;
an access network device used for communication between the terminal and the first access network device;
an access network device corresponding to a serving cell group that is activated by the terminal; or
an access network device corresponding to a serving cell that is activated by the terminal.

The second access network device is the access network device for communication between the terminal and the core network device, and at the same time, it may also be the access network device for communication between the terminal and the first access network device. In this case, the second access network device is also called a master base station, i.e., a central control node that can be used to control communications between the terminal and multiple communication nodes (including the core network device and various access network devices), for example, the second access network device may be an anchor point of data transmission connection between the terminal and the core network device.

In the architecture of dual connectivity, the access network device corresponding to the serving cell group that is activated by the terminal may be a serving MN, i.e., an access network device corresponding to an MCG activated by the terminal. Alternatively, the access network device corresponding to the serving cell group that is activated by the terminal may be a serving SN, i.e., an access network device corresponding to an SCG activated by the terminal.

In order to clearly illustrate the timing for sending the first indication message, examples of the present invention provide several possible embodiments. However, it is known to those skilled in the art that actual implementation solutions are not limited thereto.

As a first possible embodiment, before the second access network device sends the second indication message to the terminal to instruct the terminal to deactivate the cell or cell group corresponding to the first access network device, the second access network device may send the first indication message to the first access network device to stop the transmission between the first access network device and the terminal. That is, the second access network device is triggered by the first indication message to send the second indication message.

As a second possible embodiment, after the second access network device sends the second indication message to the terminal to instruct the terminal to deactivate the cell or cell group corresponding to the first access network device, the second access network device may send the first indication message to the first access network device to stop the transmission between the first access network device and the terminal. That is, the second access network device is triggered by the second indication message to send the first indication message. Optionally, the second access network device receives a first acknowledgement feedback message, and the first acknowledgement feedback message indicates that the terminal receives the second indication message; or optionally, the second access network device receives a second acknowledgement feedback message, and the second acknowledgement feedback message indicates that the terminal accesses a third access network device.

For example, in a possible scenario, for the first possible embodiment and the second possible embodiment mentioned above, an SN corresponding to a current serving SCG of the terminal sends the second indication message to the terminal, to cause the terminal to change a current serving MCG of the terminal from MCG-1 to MCG-2, and the SN also sends the first indication message to an MN corresponding to the MCG-1. The SN may send the second indication message before sending the first indication message, or the SN may send the second indication message after sending the first indication message, or the SN may send the second indication message and the first indication message simultaneously, which is not limited in examples of the present invention.

As a third possible embodiment, the second access network device receives a notification message sent by a fourth access network device or the terminal, and the notification message is sent after the fourth access network device sends the second indication message to the terminal, and the second access network device is triggered by the notification message to send the first indication message to the first access network device to stop the transmission between the first access network device and the terminal. Optionally, the notification message indicates at least one of: the terminal accessing the third access network device; the fourth access network device sending the second indication message; the fourth access network device receiving a first acknowledgement feedback message, and the first acknowledgement feedback message indicating that the terminal has received the second indication message; or the fourth access network device receiving a second acknowledgement feedback message, and the second acknowledgement feedback message indicating that the terminal accesses the third access network device.

As a fourth possible embodiment, the second access network device sends a third indication message to the fourth access network device, and the third indication message is configured to trigger the fourth access network device to send the second indication message to the terminal. Before sending the third indication message to the fourth access network device, the second access network device may send the first indication message to the first access network device to stop the transmission between the first access network device and the terminal. That is, the second access network device is triggered by the first indication message to send the third indication message.

As a fifth possible embodiment, the second access network device sends a third indication message to the fourth access network device, and the third indication message is configured to trigger the fourth access network device to send the second indication message to the terminal. After sending the third indication message to the fourth access network device, the second access network device may send the first indication message to the first access network device to stop the transmission between the first access network device and the terminal. That is, the second access network device is triggered by the third indication message to send the first indication message.

By implementing examples of the present invention, the access network device corresponding to the cell or cell group that is deactivated by the terminal can stop the transmission with the terminal, or the access network device corresponding to the cell or cell group that is to be deactivated by the terminal can stop the transmission with the terminal, so as to avoid occupying unnecessary transmission resources and avoid the waste of resources.

The first indication message is configured to stop transmission between the first access network device and a terminal, and it may be a new message or may be a message with a newly added indication content in an original message, which is not limited in examples of the present invention.

In a possible embodiment, the first indication message may include at least one of:
an identifier of a cell corresponding to the first access network device;
an identifier of a cell group corresponding to the first access network device;
an identifier of the terminal, such as a Cell Radio Network Temporary Identify (C-RNTI) identifier; or
a bearer identifier of the terminal, such as a Radio Bearer (RB) identifier.

Based on the identifier of the terminal or the bearer identifier of the terminal, the second access network device can determine the terminal which performs the deactivation, and based on this, downlink data that is not transmitted between the first access network device and the terminal is discarded.

Similarly, based on the identifier of the cell corresponding to the first access network device or the identifier of the cell group corresponding to the first access network device, the second access network device may learn that the terminal deactivates the cell or cell group corresponding to the first access network device, and based on this, downlink data that is not transmitted between the first access network device and the terminal is discarded.

After the first access network device receives the first indication message sent by the second access network device, regarding first uplink data received from the terminal before the first indication message is received, it is sent to the core network device, thereby completing the transmission of the first uplink data received. Regarding second uplink data received from the terminal after the first indication message is received, it is discarded by the first access network device, so as not to transmit the second uplink data, which prevents the first access network device from continuing to transmit the uplink data of the terminal in the case where the terminal has deactivated the cell or cell group corresponding to the first access network device, avoids occupying unnecessary transmission resources, and avoids the waste of resources.

In another possible embodiment, the indication information of the third access network device includes at least one of:
an identifier of a cell corresponding to the third access network device;
an identifier of a cell group corresponding to the third access network device; or
an interface identifier of the third access network device.

The first access network device determines the third access network device according to the indication information of the third access network device, so that subsequent downlink data that is not transmitted between the first access network device and the terminal is forwarded to the third access network.

In order to enable the terminal to receive the downlink data that is not transmitted between the first access network device and the terminal from the third access network device, the third access network device may be at least one of:
an access network device corresponding to a cell that is activated;
an access network device corresponding to a cell group that is activated;
an access network device corresponding to a cell to be activated; or
an access network device corresponding to a cell group to be activated.

It should be noted that the third access network device is the access network device corresponding to the cell or cell group that is activated, which means that it may be an access network device corresponding to an originally activated cell or cell group whose activation state is not adjusted by the terminal, or it may be an access network device corresponding to a newly activated cell or cell group whose activation state is adjusted by the terminal.

In addition, it should be noted that the third access network device and the second access network device may be the same device or may be different devices, which is not limited in examples of the present invention.

After receiving the first indication message sent by the second access network device, the first access network device does not need to discard the downlink data that is not transmitted between the first access network device and the terminal, but sends the downlink data that is not transmitted between the first access network device and the terminal to the third access network device, and stops the transmission with the terminal, and the third access network device sends the downlink data that is not transmitted between the first access network device and the terminal to the terminal, to avoid the situation where the first access network device continues to send downlink data to the terminal but the terminal cannot receive it when the terminal has deactivated the cell or cell group corresponding to the first access network device. At the same time, it also prevents the first access network device from continuing to send downlink data to the terminal when the terminal has deactivated the cell or cell group corresponding to the first access network device, avoids occupying unnecessary transmission resources, and avoids the waste of resources.

In the aforementioned examples, the first access network device stops the transmission between the first access network device and the terminal according to the first indication message. As another possible manner, the first access network device does not receive the first indication message, but the first access network device determines that the first access network device is the access network device corresponding to the deactivated cell or cell group by initiating the terminal to deactivate the cell or cell group corresponding to the first access network device, and thus stops the transmission between the first access network device and the terminal. For clear explanation, referring to FIG. 9, FIG. 9 is a schematic flowchart of another method for transmission control according to an example of the present invention. The method in this example may be performed by a first access network device, as shown in FIG. 9, the method may include, but not limited to, the following steps.

In step 901, transmission between the first access network device and a terminal is stopped based on at least one of the following trigger conditions.

The trigger conditions include: the terminal having deactivated a cell or cell group corresponding to the first access network device; and the terminal being to deactivate a cell or cell group corresponding to the first access network device.

The first access network device may be an access network device that controls the terminal to perform the deactivation and an access network device that stops the transmission with the terminal, that is, the access network device that controls the terminal to perform the deactivation and the access network device that stops the transmission with the terminal are the same access network device, so when the first access network device determines that it needs to trigger the terminal to deactivate the cell or cell group corresponding to the first access network device, the first access network device can stop the transmission between the first access network device and the terminal. Alternatively, when the first access network device has triggered the terminal to deactivate the cell or cell group corresponding to the first access network device, the first access network device can stop the transmission between the first access network device and the terminal.

As a possible embodiment, the first access network device can directly trigger the terminal to perform the deactivation, that is, the first access network device can send the second indication message to the terminal.

As another possible embodiment, the first access network device can indirectly trigger the terminal to perform the deactivation, that is, the first access network device can trigger other access network devices to send the second indication message to the terminal.

The second indication message is configured to instruct the terminal to deactivate the cell or cell group corresponding to the first access network device, and/or the second indication message is configured to instruct the terminal to activate a cell or cell group corresponding to a third access network device.

By implementing examples of the present invention, the access network device corresponding to the cell or cell group that is deactivated by the terminal can stop the transmission with the terminal, or the access network device corresponding to the cell or cell group to be deactivated by the terminal can stop the transmission with the terminal, so as to avoid occupying unnecessary transmission resource and avoid waste of resources.

In a scenario, the access network device that controls the terminal to perform the deactivation and the access network device that stops the transmission with the terminal are the same access network device, i.e., the first network device, referring to FIG. 10, FIG. 10 is a schematic flowchart of another method for transmission control according to an example of the present invention. The method in this example may be performed by a first access network device, as shown in FIG. 10, the method may include, but not limited to, the following steps.

In step 1001, a second indication message is sent to a terminal.

The second indication message is configured to instruct the terminal to deactivate the cell or cell group corresponding to the first access network device, and/or the second indication message is configured to instruct the terminal to activate a cell or cell group corresponding to a third access network device.

In step 1002, transmission between the first access network device and the terminal is stopped.

Before the second indication message is sent, the first access network device receives downlink data of the terminal from a core network or other access network devices. When the second indication message is sent, the first access network device may also have downlink data that is not transmitted to the terminal.

As a possible embodiment, the downlink data that is not transmitted between the first access network device and the terminal is forwarded to the third access network device. After the second indication message is sent, or when the second indication message is ready to be sent, the first access network device forwards the downlink data that is not transmitted between the first access network device and the terminal to the third access network device, and stops the transmission with the terminal, and the third access network device sends the downlink data that is not transmitted between the first access network device and the terminal to the terminal, so as to avoid the situation where the first access network device continues to send downlink data to the terminal but the terminal cannot receive it when the terminal has deactivated the cell or cell group corresponding to the first access network device.

As a possible embodiment, the downlink data that is not transmitted between the first access network device and the terminal is discarded. After the second indication message is sent, or when the second indication message is ready to be sent, the first access network device discards the downlink data that is not transmitted between the first access network device and the terminal, and stops the downlink transmission with the terminal, so as to prevent the first access network device from continuing to send downlink data to the terminal in the case where the terminal has deactivated the cell or cell group corresponding to the first access network device, avoid occupying unnecessary transmission resources, and avoid waste of resources.

As a possible embodiment, uplink data received from the terminal is sent to a core network device; and/or uplink data received from the terminal is discarded. Before deactivating the cell or cell group corresponding to the first access network device, the terminal will continue to send uplink data to the first access network device, and the first access network device discards uplink data that is received after the second indication message is sent, and/or the first access network device sends, to the core network device, uplink data that is received before the second indication message is sent.

As a possible embodiment, a transmission resource of the terminal is released; and/or a configuration of the transmission resource of the terminal is retained. On the one hand, the first access network device stops the transmission between the first access network device and the terminal according to the first indication message; on the other hand, regarding the transmission resource between the first access network device and the terminal as well as the configuration of the transmission resource, the first access network device can retain the configuration of the transmission resource, so that when the terminal activates the cell or cell group corresponding to the first access network device again subsequently, the first access network device can allocate the transmission resource for the terminal according to the configuration of the transmission resource retained. In order to avoid waste of transmission resource, the transmission resource can be allocated to other terminals, that is, the first access network device can release the transmission resource of the terminal and allocate the transmission resource to other terminals for use.

By implementing examples of the present invention, the access network device corresponding to the cell or cell group that is deactivated by the terminal can stop the transmission with the terminal, or the access network device corresponding to the cell or cell group to be deactivated by the terminal can stop the transmission with the terminal.

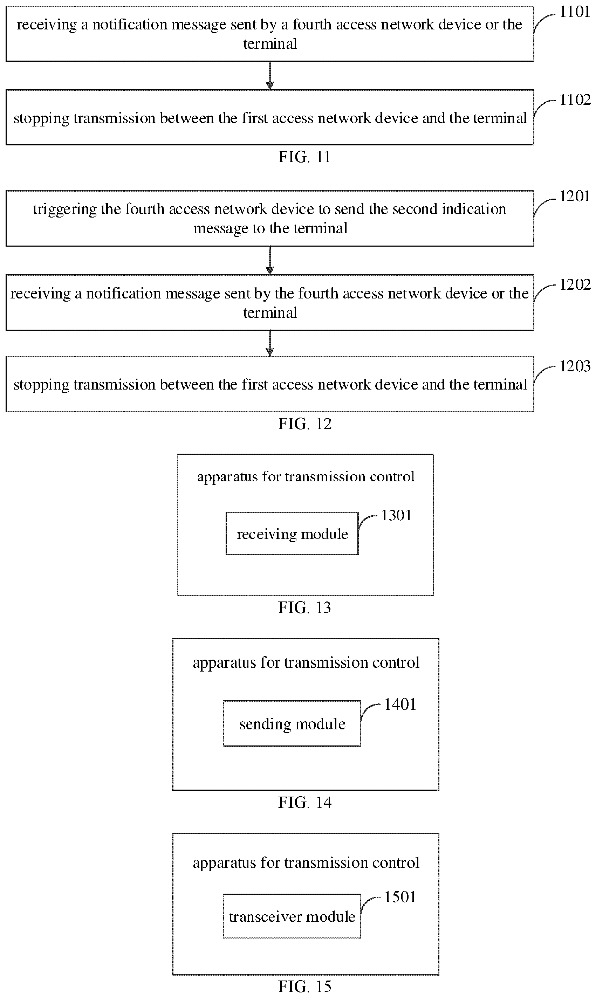

In a scenario, the access network device that controls the terminal to perform the deactivation and the access network device that stops the transmission with the terminal are different access network devices, that is, the access network device that controls the terminal to perform the deactivation is a fourth network device, and the access network device that stops transmission with the terminal is the first network device, referring to FIG. 11, FIG. 11 is a schematic flowchart of another method for transmission control according to an example of the present invention. The method in this example may be performed by the first access network device, as shown in FIG. 11, the method may include, but not limited to, the following steps.

In step 1101, a notification message sent by a fourth access network device or a terminal is received.

The notification message indicates at least one of:
the terminal accessing a third access network device;
the fourth access network device sending a second indication message;
the fourth access network device receiving a first acknowledgement feedback message, where the first acknowledgement feedback message indicates that the terminal has received the second indication message; or
the fourth access network device receiving a second acknowledgement feedback message, where the second acknowledgement feedback message indicates that the terminal accesses the third access network device.

The second indication message is configured to instruct the terminal to deactivate the cell or cell group corresponding to the first access network device, and/or the second indication message is configured to instruct the terminal to activate a cell or cell group corresponding to the third access network device.

In step 1102, transmission between the first access network device and the terminal is stopped.

Before the second indication message is sent, the first access network device receives downlink data of the terminal from a core network or other access network devices. When the second indication message is sent, the first access network device may also have downlink data that is not transmitted to the terminal.

As a possible embodiment, the downlink data that is not transmitted between the first access network device and the terminal is forwarded to the third access network device. After the second indication message is sent, or when the second indication message is ready to be sent, the first access network device forwards the downlink data that is not transmitted between the first access network device and the terminal to the third access network device, and stops the transmission with the terminal, and the third access network device sends the downlink data that is not transmitted between the first access network device and the terminal to the terminal, so as to avoid the situation where the first access network device continues to send downlink data to the terminal but the terminal cannot receive it when the terminal has deactivated the cell or cell group corresponding to the first access network device.

As a possible embodiment, the downlink data that is not transmitted between the first access network device and the terminal is discarded. After the second indication message is sent, or when the second indication message is ready to be sent, the first access network device discards the downlink data that is not transmitted between the first access network device and the terminal, and stops the downlink transmission with the terminal, so as to prevent the first access network device from continuing to send downlink data to the terminal in the case where the terminal has deactivated the cell or cell group corresponding to the first access network device, avoid occupying unnecessary transmission resources, and avoid waste of resources.

As a possible embodiment, uplink data received from the terminal is sent to a core network device; and/or uplink data received from the terminal is discarded. Before deactivating the cell or cell group corresponding to the first access network device, the terminal will continue to send uplink data to the first access network device, and the first access network device discards uplink data that is received after the second indication message is sent, and/or the first access network device sends, to the core network device, uplink data that is received before the second indication message is sent.

As a possible embodiment, a transmission resource of the terminal is released; and/or a configuration of the transmission resource of the terminal is retained. On the one hand, the first access network device stops the transmission between the first access network device and the terminal according to the first indication message; on the other hand, regarding the transmission resource between the first access network device and the terminal as well as the configuration of the transmission resource, the first access network device can retain the configuration of the transmission resource, so that when the terminal activates the cell or cell group corresponding to the first access network device again subsequently, the first access network device can allocate the transmission resource for the terminal according to the configuration of the transmission resource retained. In order to avoid waste of transmission resource, the transmission resource can be allocated to other terminals, that is, the first access network device can release the transmission resource of the terminal and allocate the transmission resource to other terminals for use.

By implementing examples of the present invention, the access network device corresponding to the cell or cell group that is deactivated by the terminal can stop the transmission with the terminal, or the access network device corresponding to the cell or cell group to be deactivated by the terminal can stop the transmission with the terminal.

In a scenario, the access network device that controls the terminal to perform the deactivation and the access network device that stops the transmission with the terminal are different access network devices, that is, the access network device that controls the terminal to perform the deactivation is a fourth network device, and the access network device that stops transmission with the terminal is the first network device, referring to FIG. 12, FIG. 12 is a schematic flowchart of another method for transmission control according to an example of the present invention. The method in this example may be performed by the first access network device, as shown in FIG. 12, the method may include, but not limited to, the following steps.

In step 1201, a fourth access network device is triggered to send a second indication message to a terminal.

The second indication message is configured to instruct the terminal to deactivate a cell or cell group corresponding to the first access network device, and/or the second indication message is configured to instruct the terminal to activate a cell or cell group corresponding to a third access network device.

In step 1202, a notification message sent by the fourth access network device or the terminal is received.

The notification message indicates at least one of:
the terminal accessing the third access network device;
the fourth access network device sending the second indication message;
the fourth access network device receiving a first acknowledgement feedback message, where the first acknowledgement feedback message indicates that the terminal has received the second indication message; or
the fourth access network device receiving a second acknowledgement feedback message, where the second acknowledgement feedback message indicates that the terminal accesses the third access network device.

In step 1203, transmission between the first access network device and the terminal is stopped.

Before the second indication message is sent, the first access network device receives downlink data of the terminal from a core network or other access network devices. When the second indication message is sent, the first access network device may also have downlink data that is not transmitted to the terminal.

As a possible embodiment, the downlink data that is not transmitted between the first access network device and the terminal is forwarded to the third access network device. After the second indication message is sent, or when the second indication message is ready to be sent, the first access network device forwards the downlink data that is not transmitted between the first access network device and the terminal to the third access network device, and stops the transmission with the terminal, and the third access network device sends the downlink data that is not transmitted between the first access network device and the terminal to the terminal, so as to avoid the situation where the first access network device continues to send downlink data to the terminal but the terminal cannot receive it when the terminal has deactivated the cell or cell group corresponding to the first access network device.

As a possible embodiment, the downlink data that is not transmitted between the first access network device and the terminal is discarded. After the second indication message is sent, or when the second indication message is ready to be sent, the first access network device discards the downlink data that is not transmitted between the first access network device and the terminal, and stops the downlink transmission with the terminal, so as to prevent the first access network device from continuing to send downlink data to the terminal in the case where the terminal has deactivated the cell or cell group corresponding to the first access network device, avoid occupying unnecessary transmission resources, and avoid waste of resources.

As a possible embodiment, uplink data received from the terminal is sent to a core network device; and/or uplink data received from the terminal is discarded. Before deactivating the cell or cell group corresponding to the first access network device, the terminal will continue to send uplink data to the first access network device, and the first access network device discards uplink data that is received after the second indication message is sent, and/or the first access network device sends, to the core network device, uplink data that is received before the second indication message is sent.

As a possible embodiment, a transmission resource of the terminal is released; and/or a configuration of the transmission resource of the terminal is retained. On the one hand, the first access network device stops the transmission between the first access network device and the terminal according to the first indication message; on the other hand, regarding the transmission resource between the first access network device and the terminal as well as the configuration of the transmission resource, the first access network device can retain the configuration of the transmission resource, so that when the terminal activates the cell or cell group corresponding to the first access network device again subsequently, the first access network device can allocate the transmission resource for the terminal according to the configuration of the transmission resource retained. In order to avoid waste of transmission resource, the transmission resource can be allocated to other terminals, that is, the first access network device can release the transmission resource of the terminal and allocate the transmission resource to other terminals for use.

By implementing examples of the present invention, the access network device corresponding to the cell or cell group that is deactivated by the terminal can stop the transmission with the terminal, or the access network device corresponding to the cell or cell group to be deactivated by the terminal can stop the transmission with the terminal.

In the above examples provided in the present invention, the methods according to examples of the present invention are introduced from perspectives of the first access network device and the second access network device, respectively. In order to implement the various functions in the methods according to the above examples of the present invention, the access network device and the first terminal each may include hardware structure(s) and software module(s), and implement the above various functions in a form of the hardware structure(s), the software module(s), or the hardware structure(s) in combination with the software module(s). A certain function among the above various functions may be implemented in the manner of the hardware structure(s), the software module(s), or the hardware structure(s) in combination with the software module(s).

Referring to FIG. 13, FIG. 13 is a schematic block diagram of an apparatus for transmission control according to an example of the present invention, and the apparatus may be a first access network device, or an apparatus set in the first access network device, or may be an apparatus that can be used in conjunction with the first access network device. As shown in FIG. 13, the apparatus includes: a receiving module 1301, configured to receive a first indication message sent by a second access network device; and the first indication message is configured to stop transmission between the first access network device and a terminal.

Further, as an embodiment, the first access network device is at least one of:
an access network device corresponding to a cell that is deactivated;
an access network device corresponding to a cell group that is deactivated;
an access network device corresponding to a cell to be deactivated; or
an access network device corresponding to a cell group to be deactivated.

As an embodiment, the first indication message includes at least one of:
an identifier of a cell corresponding to the first access network device;
an identifier of a cell group corresponding to the first access network device;
an identifier of the terminal; or
a bearer identifier of the terminal.

As an embodiment, the apparatus further includes: a processing module, configured to discard downlink data that is not transmitted between the first access network device and the terminal.

As an embodiment, the first indication message carries indication information of a third access network device; and the apparatus further includes: a sending module, configured to forward downlink data that is not transmitted between the first access network device and the terminal to the third access network device.

As an embodiment, the indication information of the third access network device includes at least one of:
an identifier of a cell corresponding to the third access network device;
an identifier of a cell group corresponding to the third access network device; or
an interface identifier of the third access network device.

As an embodiment, the third access network device is at least one of:
an access network device corresponding to a cell that is activated;
an access network device corresponding to a cell group that is activated;
an access network device corresponding to a cell to be activated; or
an access network device corresponding to a cell group to be activated.

As an embodiment, the processing module is further configured to: send first uplink data received from the terminal before receiving the first indication message to a core network device; and/or discard second uplink data received from the terminal after receiving the first indication message.

As an embodiment, the second access network device is configured to send a second indication message to the terminal; the second indication message is configured to instruct the terminal to deactivate a cell or cell group corresponding to the first access network device, and/or the second indication message is configured to instruct the terminal to activate a cell or cell group corresponding to a third access network device.

As an embodiment, the second access network device is triggered to send the first indication message by at least one of:
the second access network device sending the second indication message;
the second access network device receiving a first acknowledgement feedback message; where the first acknowledgement feedback message indicates that the terminal has received the second indication message; or
the second access network device receiving a second acknowledgement feedback message; where the second acknowledgement feedback message indicates that the terminal accesses the third access network device.

As an embodiment, the second access network device is triggered to send the second indication message by: the second access network device sending the first indication message.

As an embodiment, the processing module is further configured to: release a transmission resource of the terminal; and/or retain a configuration of the transmission resource of the terminal.

As an embodiment, the second access network device is at least one of:
an access network device used for communication between the terminal and a core network device;
an access network device used for communication between the terminal and the first access network device;
an access network device corresponding to a serving cell group that is activated by the terminal; or
an access network device corresponding to a serving cell that is activated by the terminal.

It should be noted here that the above apparatus according to examples of the present invention can realize all the method steps realized by the above method examples, and can achieve the same technical effect. The same parts and beneficial effects as the method examples will not be elaborated here.

Referring to FIG. 14, FIG. 14 is a schematic block diagram of another apparatus for transmission control according to an example of the present invention, and the apparatus may be a second access network device, or an apparatus set in the second access network device, or may be an apparatus that can be used in conjunction with the second access network device. As shown in FIG. 14, the apparatus includes: a sending module 1401, configured to send a first indication message to a first access network device; and the first indication message is configured to stop transmission between the first access network device and a terminal.

Further, as an embodiment, the first access network device is at least one of:
an access network device corresponding to a cell that is deactivated;
an access network device corresponding to a cell group that is deactivated;
an access network device corresponding to a cell to be deactivated; or
an access network device corresponding to a cell group to be deactivated.

As an embodiment, the first indication message includes at least one of:
an identifier of a cell corresponding to the first access network device;
an identifier of a cell group corresponding to the first access network device;
an identifier of the terminal; or
a bearer identifier of the terminal.

As an embodiment, the first indication message carries indication information of a third access network device; and the first indication message is configured to instruct the first access network device to forward downlink data of the terminal to the third access network device.

As an embodiment, the indication information of the third access network device includes at least one of:
an identifier of a cell corresponding to the third access network device;
an identifier of a cell group corresponding to the third access network device; or
an interface identifier of the third access network device.

As an embodiment, the third access network device is at least one of:
an access network device corresponding to a cell that is activated;
an access network device corresponding to a cell group that is activated;
an access network device corresponding to a cell to be activated; or
an access network device corresponding to a cell group to be activated.

As an embodiment, the sending module 1401 is further configured to: send a second indication message to the terminal; the second indication message is configured to instruct the terminal to deactivate a cell or cell group corresponding to the first access network device, and/or the second indication message is configured to instruct the terminal to activate a cell or cell group corresponding to a third access network device.

As an embodiment, the second access network device is triggered to send the first indication message to the first access network device by at least one of:
the second access network device sending the second indication message;
the second access network device receiving a first acknowledgement feedback message; where the first acknowledgement feedback message indicates that the terminal has received the second indication message; or
the second access network device receiving a second acknowledgement feedback message; where the second acknowledgement feedback message indicates that the terminal accesses the third access network device.

As an embodiment, the second access network device is triggered to send the second indication message by: the second access network device sending the first indication message.

As an embodiment, the apparatus further includes: a receiving module, configured to receive a notification message sent by a fourth access network device or the terminal, where the notification message is sent after the fourth access network device sends a second indication message to the terminal; or the sending module 1401 is configured to: send a third indication message to the fourth access network device, where the third indication message is configured to trigger the fourth access network device to send the second indication message to the terminal; the second indication message is configured to instruct the terminal to deactivate a cell or cell group corresponding to the first access network device, and/or the second indication message is configured to instruct the terminal to activate a cell or cell group corresponding to a third access network device.

As an embodiment, the notification message indicates at least one of:
the terminal accessing the third access network device;
the fourth access network device sending the second indication message;
the fourth access network device receiving a first acknowledgement feedback message, where the first acknowledgement feedback message indicates that the terminal has received the second indication message; or
the fourth access network device receiving a second acknowledgement feedback message, where the second acknowledgement feedback message indicates that the terminal accesses the third access network device.

As an embodiment, the second access network device is at least one of:
an access network device used for communication between the terminal and a core network device;
an access network device used for communication between the terminal and the first access network device;
an access network device corresponding to a serving cell group that is activated by the terminal; or
an access network device corresponding to a serving cell that is activated by the terminal.

It should be noted here that the above apparatus according to examples of the present invention can realize all the method steps realized by the above method examples, and can achieve the same technical effect. The same parts and beneficial effects as the method examples will not be elaborated here.

Referring to FIG. 15, FIG. 15 is a schematic block diagram of another apparatus for transmission control according to an example of the present invention, and the apparatus may be a first access network device, or an apparatus set in the first access network device, or may be an apparatus that can be used in conjunction with the first access network device. As shown in FIG. 15, the apparatus includes: a transceiver module 1501, configured to stop transmission between a first access network device and a terminal based on based on at least one trigger condition of: the terminal having deactivated a cell or cell group corresponding to the first access network device; or the terminal being to deactivate a cell or cell group corresponding to the first access network device.

Further, the transceiver module 1501 is further configured to: send a second indication message to the terminal; the second indication message is configured to instruct the terminal to deactivate the cell or cell group corresponding to the first access network device, and/or the second indication message is configured to instruct the terminal to activate a cell or cell group corresponding to a third access network device.

Further, the transceiver module 1501 is further configured to: forward downlink data that is not transmitted between the first access network device and the terminal to the third access network device.

Further, the transceiver module 1501 is further configured to: receive a notification message sent by a fourth access network device or the terminal, and the notification message indicates at least one of:
the terminal accessing a third access network device;
the fourth access network device sending a second indication message;
the fourth access network device receiving a first acknowledgement feedback message, where the first acknowledgement feedback message indicates that the terminal has received the second indication message; or
the fourth access network device receiving a second acknowledgement feedback message, where the second acknowledgement feedback message indicates that the terminal accesses the third access network device;
the second indication message is configured to instruct the terminal to deactivate the cell or cell group corresponding to the first access network device, and/or the second indication message is configured to instruct the terminal to activate a cell or cell group corresponding to the third access network device.

As an embodiment, the apparatus further includes: a processing module, configured to trigger the fourth access network device to send the second indication message to the terminal.

As an embodiment, the processing module is further configured to discard downlink data that is not transmitted between the first access network device and the terminal.

As an embodiment, the processing module is further configured to: send uplink data received from the terminal to a core network device; and/or discard uplink data received from the terminal.

As an embodiment, the processing module is further configured to: release a transmission resource of the terminal; and/or retain a configuration of the transmission resource of the terminal.

It should be noted here that the above apparatuses according to examples of the present invention can realize all the method steps realized by the above method examples, and can achieve the same technical effect. The same parts and beneficial effects as the method examples will not be elaborated here.

In order to implement the above examples, examples of the present invention also provide a communication device, which includes: a processor; and a memory having stored therein a computer program, and the processor is configured to execute the computer program stored in the memory to cause the communication device to perform the method as described in examples shown in FIG. 3 to FIG. 7.

In order to implement the above examples, examples of the present invention also provide a communication device, which includes: a processor; and a memory having stored therein a computer program, and the processor is configured to execute the computer program stored in the memory to cause the communication device to perform the method as described in examples shown in FIG. 8.

In order to implement the above examples, examples of the present invention also provide a communication device, which includes: a processor; and a memory having stored therein a computer program, and the processor is configured to execute the computer program stored in the memory to cause the communication device to perform the method as described in examples shown in FIG. 9 to FIG. 12.

In order to implement the above examples, examples of the present invention also provide a communication device, which includes: a processor and an interface circuit, the interface circuit is configured to receive code instructions and transmit the code instructions to the processor, and the processor is configured to run the code instructions to perform the method as described in examples shown in FIG. 3 to FIG. 7.

In order to implement the above examples, examples of the present invention also provide a communication device, which includes: a processor and an interface circuit, the interface circuit is configured to receive code instructions and transmit the code instructions to the processor, and the processor is configured to run the code instructions to perform the method as described in examples shown in FIG. 8.

In order to implement the above examples, examples of the present invention also provide a communication device, which includes: a processor and an interface circuit, the interface circuit is configured to receive code instructions and transmit the code instructions to the processor, and the processor is configured to run the code instructions to perform the method as described in examples shown in FIG. 9 to FIG. 12.

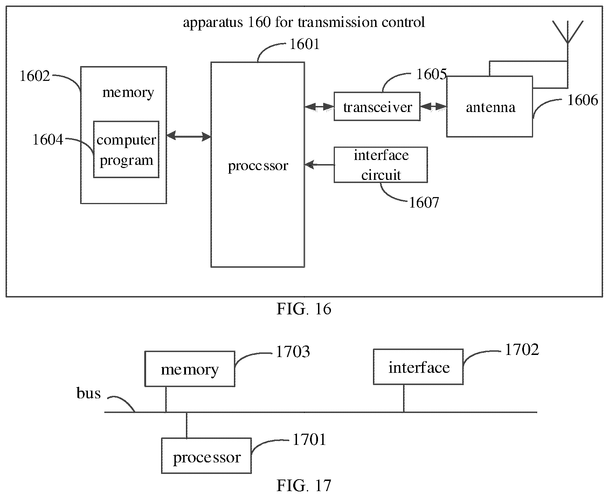

Referring to FIG. 16, FIG. 16 is a schematic block diagram of another apparatus for transmission control according to examples of the present invention. The apparatus 160 for transmission control may be the first access network device, may also be the second access network device, may also be a chip, a chip system, or a processor that supports the access network device to implement the above method, or may also be a chip, a chip system, or a processor that supports the terminal to implement the above method. The apparatus may be used to implement the methods as described in the above method examples, and for details, reference may be made to the descriptions on the above method examples.

The apparatus 160 for transmission control may include one or more processors 1601. The processor 1601 may be a general-purpose processor or a special-purpose processor. For example, it may be a baseband processor or a central processing unit. The baseband processor may be configured to process a communication protocol and communication data, and the central processing unit may be configured to control the apparatus for transmission control (such as a base station, a baseband chip, a terminal, a terminal chip, a DU or a CU, etc.), execute computer programs, and process data of computer programs.

Optionally, the apparatus 160 for transmission control may further include one or more memories 1602 that may have stored therein a computer program 1604. The processor 1601 executes the computer program 1604 to cause the apparatus 160 for transmission control to implement the methods as described in the above method examples. Optionally, the memory 1602 may have stored therein data. The apparatus 160 for transmission control and the memory 1602 may be set separately or integrated together.

Optionally, the apparatus 160 for transmission control may further include a transceiver 1605 and an antenna 1606. The transceiver 1605 may be called a transceiver element, a transceiver machine, a transceiver circuit or the like, for implementing a transceiver function. The transceiver 1605 may include a receiver and a transmitter. The receiver may be called a receiving machine, a receiving circuit or the like, for implementing a receiving function. The transmitter may be called a sending machine, a sending circuit or the like for implementing a sending function.

Optionally, the apparatus 160 for transmission control may further include one or more interface circuits 1607. The interface circuit 1607 is configured to receive code instructions and transmit the code instructions to the processor 1601. The processor 1601 runs the code instructions to enable the apparatus 160 for transmission control to execute the methods as described in the foregoing method examples.

In an embodiment, the processor 1601 may include the transceiver configured to implement receiving and sending functions. For example, the transceiver may be a transceiver circuit, an interface, or an interface circuit. The transceiver circuit, the interface or the interface circuit configured to implement the receiving and sending functions may be separated or may be integrated together. The above transceiver circuit, interface or interface circuit may be configured to read and write codes/data, or the above transceiver circuit, interface or interface circuit may be configured to transmit or transfer signals.

In an embodiment, the processor 1601 may have stored therein a computer program 1604 that, when run on the processor 1601, causes the apparatus 160 for transmission control to implement the method as described in the foregoing method examples. The computer program 1604 may be solidified in the processor 1601, and in this case, the processor 1601 may be implemented by hardware.

In an embodiment, the apparatus 160 for transmission control may include a circuit, and the circuit may implement the sending, receiving or communicating function in the foregoing method examples. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (also called positive channel metal oxide semiconductor, PMOS), a bipolar junction transistor (BJT), a bipolar CMOS (BiCMOS), silicon germanium (SiGe), gallium arsenide (GaAs), etc.

The apparatus for transmission control described in the above examples may be the first access network device, the second access network device or the third access network device, but the scope of the apparatus for transmission control described in the present invention is not limited thereto, and a structure of the apparatus for transmission control is not limited by FIG. 13 to FIG. 16. The apparatus for transmission control may be a stand-alone device or may be a part of a larger device. For example, the apparatus for transmission control may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, an access network device, a cloud device, an artificial intelligence device, etc.;
(6) others.

For the case where the apparatus for transmission control may be a chip or a chip system, reference may be made to a schematic structural diagram of the chip shown in FIG. 17. The chip shown in FIG. 17 includes a processor 1701 and an interface 1702. In the chip, one or more processors 1701 may be provided, and more than one interface 1702 may be provided.

For the case where the chip is used to implement functions of the first access network device in examples of the present invention: the interface 1702 is configured to receive code instructions and transmit the code instructions to the processor; and the processor 1701 is configured to run the code instructions to perform the method as described with reference to FIG. 3 to FIG. 7.

For the case where the chip is used to implement functions of the second access network device in examples of the present invention: the interface 1702 is configured to receive code instructions and transmit the code instructions to the processor; and the processor 1701 is configured to run the code instructions to perform the method as described with reference to FIG. 8.

For the case where the chip is used to implement functions of the first access network device in examples of the present invention: the interface 1702 is configured to receive code instructions and transmit the code instructions to the processor; and the processor 1701 is configured to run the code instructions to perform the method as described with reference to FIG. 9 to FIG. 12.

Optionally, the chip further includes a memory 1703 for storing necessary computer programs and data.

Those skilled in the art may also understand that various illustrative logical blocks and steps listed in examples of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of examples of the present invention.

Examples of the present invention also provide a communication system. The system includes an random access device as the first access network device and an random access device as the second access network device in above examples as described with reference to FIG. 13 to FIG. 15, or the system includes an random access device as the first access network device and an random access device as the second access network device in above examples as described with reference to FIG. 16.

The present invention also provides a readable storage medium having stored therein instructions that, when executed by a computer, cause functions of any of the above method examples to be implemented.

The present invention also provides a computer program product that, when executed by a computer, cause functions of any of the above method examples to be implemented.

The above examples may be implemented in whole or in part by software, hardware, firmware or any combination thereof. When implemented using the software, the above examples may be implemented in whole or in part in a form of the computer program product. The computer program product includes one or more computer programs. When the computer program is loaded and executed on the computer, all or part of the processes or functions according to examples of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of examples of the present invention, nor are they intended to represent a sequential order.

The term "at least one" used in the present invention may also be described as one or more, and the term "a plurality of/multiple" may cover two, three, four or more, which are not limited in the present invention. In examples of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the apparatus for transmission control, and the values or representations of the parameters may also be other values or representations understandable by the apparatus for transmission control. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with examples disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method examples, which will not be repeated here.

The above only describes some specific embodiments of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for transmission control, performed by a first access network device, comprising:
receiving a first indication message sent by a second access network device;
wherein the first indication message is configured to stop transmission between the first access network device and a terminal.

2. The method according to claim 1, wherein the first access network device is at least one of:
an access network device corresponding to a cell that is deactivated;
an access network device corresponding to a cell group that is deactivated;
an access network device corresponding to a cell to be deactivated; or
an access network device corresponding to a cell group to be deactivated.

3. The method according to claim 1 or 2, wherein the first indication message comprises at least one of:
an identifier of a cell corresponding to the first access network device;
an identifier of a cell group corresponding to the first access network device;
an identifier of the terminal; or
a bearer identifier of the terminal.

4. The method according to claim 1 or 2, further comprising:
discarding downlink data that is not transmitted between the first access network device and the terminal.

5. The method according to claim 1 or 2, wherein the first indication message carries indication information of a third access network device; and
the method further comprises:
forwarding downlink data that is not transmitted between the first access network device and the terminal to the third access network device.

6. The method according to claim 5, wherein the indication information of the third access network device comprises at least one of:
an identifier of a cell corresponding to the third access network device;
an identifier of a cell group corresponding to the third access network device; or
an interface identifier of the third access network device.

7. The method according to claim 5, wherein the third access network device is at least one of:
an access network device corresponding to a cell that is activated;
an access network device corresponding to a cell group that is activated;
an access network device corresponding to a cell to be activated; or
an access network device corresponding to a cell group to be activated.

8. The method according to any one of claims 1-7, further comprising:
sending first uplink data received from the terminal before receiving the first indication message to a core network device; and/or
discarding second uplink data received from the terminal after receiving the first indication message.

9. The method according to any one of claims 1-7, wherein the second access network device is configured to send a second indication message to the terminal;
the second indication message is configured to instruct the terminal to deactivate a cell or cell group corresponding to the first access network device, and/or
the second indication message is configured to instruct the terminal to activate a cell or cell group corresponding to a third access network device.

10. The method according to claim 9, wherein the second access network device is triggered to send the first indication message by at least one of:
the second access network device sending the second indication message;
the second access network device receiving a first acknowledgement feedback message; wherein the first acknowledgement feedback message indicates that the terminal has received the second indication message; or
the second access network device receiving a second acknowledgement feedback message; wherein the second acknowledgement feedback message indicates that the terminal accesses the third access network device.

11. The method according to claim 9, wherein the second access network device is triggered to send the second indication message by:
the second access network device sending the first indication message.

12. The method according to any one of claims 1-7, further comprising:
releasing a transmission resource of the terminal; and/or
retaining a configuration of the transmission resource of the terminal.

13. The method according to any one of claims 1-7, wherein the second access network device is at least one of:
an access network device used for communication between the terminal and a core network device;
an access network device used for communication between the terminal and the first access network device;
an access network device corresponding to a serving cell group that is activated by the terminal; or
an access network device corresponding to a serving cell that is activated by the terminal.

14. A method for transmission control, performed by a second access network device, comprising:
sending a first indication message to the first access network device;
wherein the first indication message is configured to stop transmission between the first access network device and a terminal.

15. The method according to claim 14, wherein the first access network device is at least one of:
an access network device corresponding to a cell that is deactivated;
an access network device corresponding to a cell group that is deactivated;
an access network device corresponding to a cell to be deactivated; or
an access network device corresponding to a cell group to be deactivated.

16. The method according to claim 14, wherein the first indication message comprises at least one of:
an identifier of a cell corresponding to the first access network device;
an identifier of a cell group corresponding to the first access network device;
an identifier of the terminal; or
a bearer identifier of the terminal.

17. The method according to claim 14 or 15, wherein the first indication message carries indication information of a third access network device; and
the first indication message is configured to instruct the first access network device to forward downlink data of the terminal to the third access network device.

18. The method according to claim 17, wherein the indication information of the third access network device comprises at least one of:
an identifier of a cell corresponding to the third access network device;
an identifier of a cell group corresponding to the third access network device; or
an interface identifier of the third access network device.

19. The method according to claim 17, wherein the third access network device is at least one of:
an access network device corresponding to a cell that is activated;
an access network device corresponding to a cell group that is activated;
an access network device corresponding to a cell to be activated; or
an access network device corresponding to a cell group to be activated.

20. The method according to any one of claims 14-19, further comprising:
sending a second indication message to the terminal;
wherein the second indication message is configured to instruct the terminal to deactivate a cell or cell group corresponding to the first access network device, and/or
the second indication message is configured to instruct the terminal to activate a cell or cell group corresponding to a third access network device.

21. The method according to claim 20, wherein the second access network device is triggered to send the first indication message to the first access network device by at least one of:
the second access network device sending the second indication message;
the second access network device receiving a first acknowledgement feedback message; wherein the first acknowledgement feedback message indicates that the terminal has received the second indication message; or
the second access network device receiving a second acknowledgement feedback message; wherein the second acknowledgement feedback message indicates that the terminal accesses the third access network device.

22. The method according to claim 20, wherein the second access network device is triggered to send the second indication message by:
the second access network device sending the first indication message.

23. The method according to any one of claims 14-19, further comprising:
receiving a notification message sent by a fourth access network device or the terminal, wherein the notification message is sent after the fourth access network device sends a second indication message to the terminal; or
sending a third indication message to the fourth access network device, wherein the third indication message is configured to trigger the fourth access network device to send the second indication message to the terminal;
wherein the second indication message is configured to instruct the terminal to deactivate a cell or cell group corresponding to the first access network device, and/or
the second indication message is configured to instruct the terminal to activate a cell or cell group corresponding to a third access network device.

24. The method according to claim 23, wherein the notification message indicates at least one of:
the terminal accessing the third access network device;
the fourth access network device sending the second indication message;
the fourth access network device receiving a first acknowledgement feedback message, wherein the first acknowledgement feedback message indicates that the terminal has received the second indication message; or
the fourth access network device receiving a second acknowledgement feedback message, wherein the second acknowledgement feedback message indicates that the terminal accesses the third access network device.

25. The method according to any one of claims 14-19, wherein the second access network device is at least one of:
an access network device used for communication between the terminal and a core network device;
an access network device used for communication between the terminal and the first access network device;
an access network device corresponding to a serving cell group that is activated by the terminal; or
an access network device corresponding to a serving cell that is activated by the terminal.

26. A method for transmission control, performed by a first access network device, comprising:
stopping transmission between the first access network device and a terminal based on at least one trigger condition of:
the terminal having deactivated a cell or cell group corresponding to the first access network device; or
the terminal being to deactivate a cell or cell group corresponding to the first access network device.

27. The method according to claim 26, further comprising:
sending a second indication message to the terminal;
wherein the second indication message is configured to instruct the terminal to deactivate the cell or cell group corresponding to the first access network device, and/or
the second indication message is configured to instruct the terminal to activate a cell or cell group corresponding to a third access network device.

28. The method according to claim 27, further comprising:
forwarding downlink data that is not transmitted between the first access network device and the terminal to the third access network device.

29. The method according to claim 26, further comprising:
receiving a notification message sent by a fourth access network device or the terminal, wherein the notification message indicates at least one of:
the terminal accessing a third access network device;
the fourth access network device sending a second indication message;
the fourth access network device receiving a first acknowledgement feedback message, wherein the first acknowledgement feedback message indicates that the terminal has received the second indication message; or
the fourth access network device receiving a second acknowledgement feedback message, wherein the second acknowledgement feedback message indicates that the terminal accesses the third access network device;
wherein the second indication message is configured to instruct the terminal to deactivate the cell or cell group corresponding to the first access network device, and/or
the second indication message is configured to instruct the terminal to activate a cell or cell group corresponding to the third access network device.

30. The method according to claim 29, further comprising:
triggering the fourth access network device to send the second indication message to the terminal.

31. The method according to claim 26, further comprising:
discarding downlink data that is not transmitted between the first access network device and the terminal.

32. The method according to any one of claims 26-31, further comprising:
sending uplink data received from the terminal to a core network device; and/or
discarding uplink data received from the terminal.

33. The method according to any one of claims 26-31, further comprising:
releasing a transmission resource of the terminal; and/or
retaining a configuration of the transmission resource of the terminal.

34. An apparatus for transmission control, comprising:
a receiving module, configured to receive a first indication message sent by a second access network device;
wherein the first indication message is configured to stop transmission between a first access network device and a terminal.

35. An apparatus for transmission control, comprising:
a sending module, configured to send a first indication message to a first access network device;
wherein the first indication message is configured to stop transmission between the first access network device and a terminal.

36. An apparatus for transmission control, comprising:
a transceiver module, configured to stop transmission between a first access network device and a terminal based on at least one trigger condition of:
the terminal having deactivated a cell or cell group corresponding to the first access network device; or
the terminal being to deactivate a cell or cell group corresponding to the first access network device.

37. A communication device, comprising:
a processor; and
a memory, having stored therein a computer program,
wherein the processor is configured to execute the computer program stored in the memory to cause the communication device to perform the method according to any one of claims 1-13.

38. A communication device, comprising:
a processor; and
a memory, having stored therein a computer program,
wherein the processor is configured to execute the computer program stored in the memory to cause the communication device to perform the method according to any one of claims 14-25.

39. A communication device, comprising:
a processor; and
a memory, having stored therein a computer program,
wherein the processor is configured to execute the computer program stored in the memory to cause the communication device to perform the method according to any one of claims 26-33.

40. A communication device, comprising: a processor and an interface circuit;
wherein the interface circuit is configured to receive code instructions and transmit the code instructions to the processor; and
the processor is configured to run the code instructions to perform the method according to any one of claims 1-13.

41. A communication device, comprising: a processor and an interface circuit;
wherein the interface circuit is configured to receive code instructions and transmit the code instructions to the processor; and
the processor is configured to run the code instructions to perform the method according to any one of claims 14-25.

42. A communication device, comprising: a processor and an interface circuit;
wherein the interface circuit is configured to receive code instructions and transmit the code instructions to the processor; and
the processor is configured to run the code instructions to perform the method according to any one of claims 26-33.

43. A computer-readable storage medium, having stored therein instructions that, when executed, cause the method according to any one of claims 1-13 to be implemented.

44. A computer-readable storage medium, having stored therein instructions that, when executed, cause the method according to any one of claims 14-25 to be implemented.

45. A computer-readable storage medium, having stored therein instructions that, when executed, cause the method according to any one of claims 26-33 to be implemented.
